# EUROPEAN PATENT SPECIFICATION

(11) **EP 4 366 157 B1**
(45) Date of publication and mention of the grant of the patent: **19.08.2026**
(21) Application number: 23207818.8
(22) Date of filing: 04.11.2023
(51) Int. Cl.: H02S 20/24, F24S 25/10, F24S 25/30

(54) **FRAME PART FOR SUPPORTING AT LEAST ONE SOLAR PANEL WITH RESPECT TO A SUPPORT SURFACE, FRAME AND SOLAR SYSTEM AND METHOD FOR MOUNTING SOLAR PANELS**
RAHMENTEIL ZUR ABSTÜTZUNG MINDESTENS EINES SOLARPANEELS GEGENÜBER EINER TRAGFLÄCHE, RAHMEN UND SOLARSYSTEM UND VERFAHREN ZUR MONTAGE VON SOLARPANEELEN
PARTIE DE CADRE POUR SUPPORTER AU MOINS UN PANNEAU SOLAIRE PAR RAPPORT À UNE SURFACE DE SUPPORT, CADRE ET SYSTÈME SOLAIRE ET PROCÉDÉ DE MONTAGE DE PANNEAUX SOLAIRES

(30) Priority: 04.11.2022 NL 2033469
(43) Date of publication of application: 08.05.2024
(73) Proprietor: Tinteq Holding B.V., 3812 RZ Amersfoort (NL)
(72) Inventor: Wieriks, Peter Joost, Houten (NL); Jansen, Marco Willem, Soest (NL); Van Benten, Jacobus Cornelis Maria, Montfoort (NL); Beekmann, Jasper, Zeist (NL); Barentsen, Matthijs Amandus, Zeist (NL); Frima, Tim, Zeist (NL)
(74) Representative: IP Maison

(56) References cited:
- EP-A1- 3 917 002
- DE-A1- 102016 007 488
- DE-U1- 202022 102 550
- US-A- 6 046 399
- US-A1- 2021 257 960
- US-B2- 10 931 225
- US-B2- 9 038 329

## Description

The present invention relates to a frame part for supporting at least one solar panel with respect to a support surface, in particular a flat roof, a frame comprising such frame part and a solar system comprising such frame or frame part. A flat roof should in this context also be understood to comprise a surface with a slight inclination, up to about 5 or 10 degrees. The invention further relates to a method for mounting solar panels.

The Interest for solar energy is still increasing and so is the amount of energy requested. This has led to the development of panels with a higher efficiency, but also to panels with an increased size. This increased size may lead to a more efficient production of the panels, more efficient panels themselves and to a reduction of the number of physical handlings in order to mount the panels and therewith to reduced placement costs.

However, handling these larger panels becomes more and more difficult, since their width has now become so large that an average craftsman is no longer able to reach the remote side of the panel he is working on. In configurations where panels are mounted so close to each other that they block access to one another from one or more sides, this leads to difficulties when mounting the panels. This situation especially occurs in particular when a so called "east-west" or "symmetrical" arrangement is built: a set up wherein panels are arranged under an angle with respect to the (horizontal) surface which is most commonly a flat roof, wherein their adjacent sides are lifted (further) from the surface with respect to their distal sides.

When mounting a first panel, all sides of said panel are accessible, but for the second one it is no longer possible to take position at the high side (further lifted from the surface). In practice, solar panels are secured with gripping devices, most of the time formed by clamps. A first clamp, at a side of the panel where the worker is standing can normally be reached, but a second one at a remote side forms a problem. In order to still be able to mount the panels, workers tend to lean on the panels for reaching their far ends. This is bad practice however, since the panels may damage or even break when unallowed forces are applied on them.

The German Patent publication DE202022102550 U1 proposes a solution in which it is not possible to position two solar panels adjacently in "east-west" or "symmetrical" position, because fixing the solar panel with the clamps is only possible when a worker stands in between the panels. From an aerodynamic point of view this is highly undesired. It is therefore a goal of the present invention to provide a solution for supporting at least one solar panel with respect to a support surface that takes away the disadvantages of the prior art and that allows to mount solar panels that are larger than a man can reach, in an adjacent way.

The invention thereto proposes a frame part for supporting at least one solar panel with respect to a support surface, in particular a flat roof, comprising a first gripping device, such as a clamp, for gripping a first solar panel at or near a first longitudinal side, a second gripping device, such as a clamp, for gripping the first solar panel remote from the first longitudinal side, in particular at or near a second longitudinal side opposite the first longitudinal side, a beam for positioning the first and second gripping device at a mutual distance in a direction parallel to the support surface, an upright, connected to the beam and extending at an angle from the beam, for keeping the second gripping device at such a distance from the support surface that the second gripping device is further from the support surface than the first gripping device and the first solar panel is therefore arranged at an angle to the support surface when supported, wherein the second gripping device is rotatably connectable to the upright, in order to be able to rotate the first solar panel relative to the frame part when engaged by the second gripping device.

The frame part according to the invention allows to fix a second gripping device to the panel, which second gripping device is normally the one remote from the worker once the panel is in its intended orientation. Subsequently the panel can be rotated to its intended orientation. Finally, a first gripping device can be fixed to the panel. The latter is then situated at the side where the panel can still be reached.

The frame part according to the invention allows to mount panels with sizes that are too large to reach over for a craftsman, without the need to lean on the panel. The frame part according to the invention further allows to mount larger panels by a sole person.

At or near a longitudinal side should in this context be understood to be closer to said longitudinal side than to a further longitudinal side opposite to said longitudinal side. This may comprise on or at or near longitudinal sides that connect said longitudinal side and said further longitudinal side.

In a mounted situation, the solar panel is fixed by the first gripping device and the second gripping device. Since it then connects the ends of the beam and the upright remote from the ones connected directly to each other, rigidity is brought to the frame part by the solar panel. In order to save materials, the frame part according to the invention is free from beams and/or connecting elements parallel to the plane of the panels. In other words, in a frame part according to the invention, the solar panel is the sole item extending between the first gripping device and the second gripping device. In yet another way expressed, the ends of the beam and the upright remote from the ones connected directly to each other are free of connection elements.

Alternatively, the invention may comprise a frame part for supporting at least one first solar panel with respect to a support surface, in particular a flat roof, comprising a first gripping device, such as a clamp, for gripping a first solar panel at or near a first longitudinal side, a second gripping device, such as a clamp, for gripping the first solar panel at or near a second longitudinal side opposite the first longitudinal side of said panel, a beam for positioning the first and second gripping device at a mutual distance in a direction parallel to the support surface, an upright, connected to the beam and extending at an angle from the beam, for keeping the second gripping device at such a distance from the support surface that the second gripping device is further from the support surface than the first gripping device and the first solar panel is therefore arranged at an angle to the support surface when supported wherein the first gripping device is rotatably connectable to the beam, in order to be able to rotate the first solar panel relative to the frame part when engaged by the first gripping device.

In a preferred embodiment of the frame part according to the invention, the second gripping device and the upright are detachable from each other in at least one first mutual angular orientation, for connecting the second gripping device to the first solar panel before connecting the second gripping device to the upright. This allows to prepare the fixation before the solar panel is brought into position. This way, work can be prepared up front, or for instance be done at a more convenient location. After the coupling of the second gripping member with the upright, the solar panel can be brought in its intended orientation.

In the alternative, the first gripping device and the beam may be detachable from each other in at least one first mutual angular orientation, for connecting the first gripping device to the first solar panel before connecting the first gripping device to the beam.

In the following, all embodiments and features are described in relation to the situation wherein the second gripping device is detachable and/or rotatable to the upright. All embodiments and features that are introduced can - with the straightforward amendments needed - also be applied in configurations wherein the first gripping device is detachable and/or rotatable with respect to the beam.

In a further embodiment, the second gripping device and the upright comprise mutually cooperating locking elements, such as a cam and a slot in which the cam can be received in a form-fitting manner by mutual rotation of the second gripping device relative to the upright, which locking elements are configured to release the lock in at least the first mutual angular orientation, and to engage the lock in at least a second angular orientation, in which the first solar panel is engaged by both the first and the second gripping device.

For instance, the first mutual angular orientation is an orientation wherein the solar panel extends in a horizontal plane, or essentially in a horizontal plane, or wherein it extends at any angle from 0 to 90 degrees with respect to the support surface. The second angular orientation may also comprise an angular range, which should at least comprise the angle at which the solar panel is to be mounted on the surface.

In order to fixate the solar panel in its intended orientation with respect to the support surface, in a preferred embodiment, the first gripping device is displaceable relative to the beam with a directional component in the direction from and towards the upright. In practice, the solar panel is then first mounted on the uprights with the second gripping part, then brought in its intended angular orientation with the support surface wherein one side of the solar panel rests on the beam. The first gripping device can be retracted before the solar panel is brought into its intended angular orientation and be moved toward the panel after the solar panel is brought into its intended angular orientation and then brought in the position wherein it grips the panel and be fixed with respect to the beam.

In yet another embodiment, the beam extends on either side of the connection with the upright and is designed to hold a third gripping device on a side remote from the first gripping device, for engaging a second solar panel, wherein the frame is designed to hold a fourth gripping device which is rotatably connected to the upright, for being able to rotate the second solar panel relative to the frame part when engaged by the fourth gripping device or the frame is provided with a second upright, adjacent to the first upright, to hold a third gripping device which is rotatably connected to the second upright, for being able to rotate the second solar panel relative to the frame part when engaged by the third gripping device, wherein the frame part is configured for holding the first and the second solar panel at such small mutual distance that entrance of personnel in between the first and the second solar panel is prohibited, and preferably wherein the frame part is configured for holding the first and the second solar panel positioned adjacent to each other and wherein the second gripping device are provided with a locking element such as a bolt or a clamp that are accessible from the bottom side of the respective first and second solar panel. Such way, a so called "east-west" orientation of the panels is obtained. It may be evident that a number of coupled beam parts extending in the same direction is considered as "a beam" in the context of this invention too.

Like the first gripping device, the third gripping device may be displaceable relative to the beam with a directional component in the direction towards the upright.

The upright is rotatably connected to the beam for orienting the upright parallel to the beam for allowing compact transportation of the frame part. In a further embodiment, the upright is provided with a cable carrier which is rotatable relative to the upright and which is displaceable between a first position, in which the cable carrier is wholly received in the upright and a second position, in which the cable carrier extends with a directional component perpendicular to the upright and preferably completely perpendicular to the upright and wherein at least one cable eye or cable duct or cable clamp extends outside the upright.

The invention also relates to a frame, formed from at least two frame parts according to one of the preceding claims, wherein the beams extend parallel to each other and are mutually connected by a spacer, wherein the beams and the spacer are provided with mutually cooperating connecting elements, which are arranged for form-fitting engagement with each other when the spacer extends perpendicular to the beams, parallel to the support surface. Preferably, this form-fitting engagement takes place if and only if the spacer extends perpendicular to the beams. These connecting elements assist in forming a straight frame even if there is still little coherence between frame parts to be connected.

The spacer may for instance be provided with a plurality of connecting elements cooperating with the beams, which connecting elements are spaced from each other in a longitudinal direction of the spacer, in order to be able to connect parallel beams at a plurality of distances perpendicular to the spacer. The spacer may further be configured for carrying a weight, such as a (pavement) tile.

The beams and spacers according to the invention may be mutually coupled or be composed of mutually coupled elements. In order to avoid deformations due to heating of these usually metal parts, a coupling may be applied that allows mutual displacement from a default (coupled) position. The coupling may for instance comprise a notch on one beam and/or spacer and a slot on another beam or spacer, wherein the notch is accommodated in the slot in the default (coupled) position. The coupling may be configured for urging the notch into the default position, unless a threshold spring force is exceeded.

The invention also relates to a method for installing solar panels, comprising the steps of:
- Prior to bringing a solar panel into a definitive orientation with respect to a support surface, engaging the solar panel with a second gripping device at or near a second longitudinal side of the solar panel opposite to a first longitudinal side thereof, the second gripping device connected or connectable to a beam for supporting the at least one solar panel relative to a support surface;
- Bringing the solar panel into a definitive orientation with respect to a support surface;
- Subsequently to bringing a solar panel into a definitive orientation relative to a support surface, engaging the solar panel with a first gripping device at or at the height of the first longitudinal side of the solar panel.

Herein, the second gripping device may be coupled to a frame part for carrying a solar panel prior to bringing the solar panel into the final orientation relative to the support surface and placing it in a defined orientation in the coupled position in a definitive orientation while the second gripping device and the frame part rotate relative to each other.

The invention also relates to a method for arranging frame parts for supporting solar panels on a base, comprising arranging frame parts with beams extending in a longitudinal direction, mutually connecting adjacent beams alternately with spacers extending perpendicular to the longitudinal direction that interconnect with the beams or with a solar panel carried by two adjacent beams.

The invention will now be elucidated into more detail with reference to the following figures. Herein:
- Figures 1A, 1B, 1C schematically show steps of a method according to the invention;
- Figure 2 shows a detail of an upright according to the invention;
- Figure 3 shows a first view of the upright from figure 2 with a gripping device;
- Figure 4 shows a second view of the upright from figure 2 with a gripping device;
- Figure 5 shows a beam and a spacer according to the invention;
- Figure 6 shows a roof system with frame parts according to the invention;
- Figure 7 shows a coupling for two beams or spacers according to the invention.

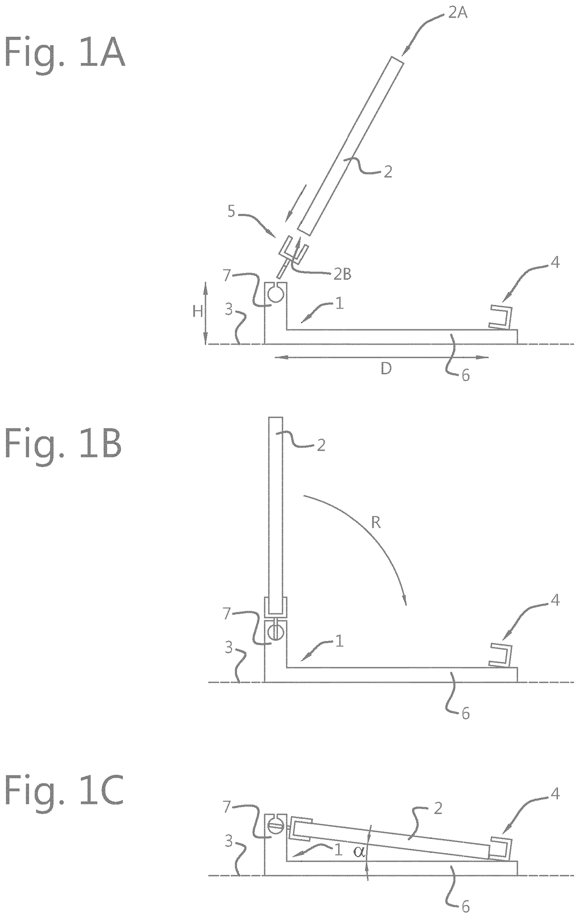

Figure 1A shows a first steps of a method according to the present invention. Visible is a frame part 1 for supporting at least one solar panel 2 with respect to a support surface 3 comprising a first gripping device 4, such as a clamp, for gripping a first solar panel at or near a first longitudinal side 2A and a second gripping device 5, such as a clamp, for gripping the first solar panel at or near a second longitudinal side 2B thereof opposite the first longitudinal side. The frame part comprises a beam 6 for positioning the first and second gripping device at a mutual distance D in a direction parallel to the support surface and an upright 7, connected to the beam 6 and extending at an angle from the beam, for keeping the second gripping device 7 at such a distance H from the support surface 3 that the second gripping device 7 is further from the support surface 3 than the first gripping device 4.

Figure 1B shows that the second gripping device 5 is now rotatably connected to the upright 7, in order to be able to rotate the solar panel 2 relative to the frame part 1 in a direction R when engaged by the second gripping device 5.

Figure 1C shows how the solar panel 2 is now arranged at an angle to the support surface 3 and supported by the frame part 1. As a last step, the first gripping member 4 must be moved toward the solar panel 2 in a direction F.

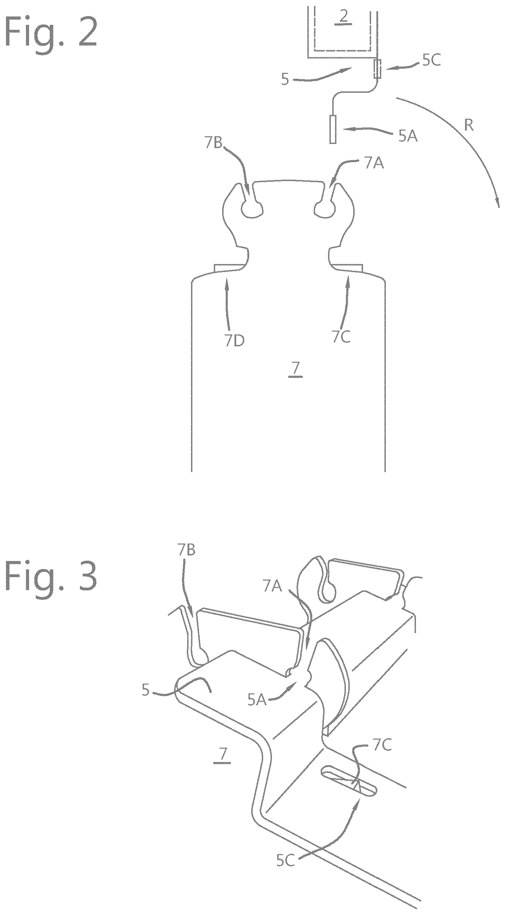

Figure 2 shows a detail of an upright 7 according to the present invention. The second gripping device 5 and the upright 7 are detached from each other. In the example given, this is possible in a first mutual angular orientation wherein the second gripping member 5 is in an orientation wherein it can hold a solar panel 2 in a vertical position, for connecting the second gripping device 5 to the solar panel 2 before connecting the second gripping device 5 to the upright 7. For this purpose, the second gripping device 5 and the upright 7 comprise mutually cooperating rotating elements formed by a first hinge part 5A and a second hinge part 7A. The upright 7 comprises a further rotating element 7B for cooperating with a rotating element of a further gripping device for a second solar panel.

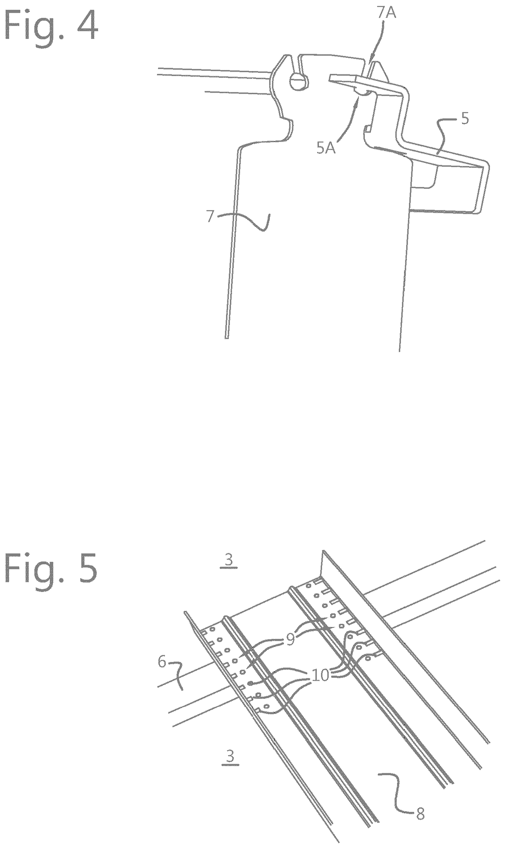

Figures 3 and 4 show different views on a situation wherein the second gripping device 5 and the upright 7 are engaged, in particular their mutually cooperating rotating elements 5A, 7A. The second gripping device 5 and the upright 7 also comprise mutually cooperating rotating elements formed by a cam 5C and a slot 7C in which the cam 5C can be received in a form-fitting manner by mutual rotation R of the second gripping device 5 relative to the upright 7, which locking elements are configured to release the lock in at least the first mutual angular orientation (shown in figure 2 ), and to engage the lock in at least a second angular orientation (shown in figures 3 and 4).

Figure 5 shows a beam 6 and a spacer 8 according to the invention. The beam 6 is connected by a spacer 8, wherein the beam 6 and the spacer 8 are provided with mutually cooperating connecting elements 9, 10, which are arranged for form-fitting engagement with each other when the spacer 8 extends perpendicular to the beam 6, parallel to the support surface 3. In general the present invention relates to a beam, provided with connecting elements, such as protrusions, for coupling with a spacer provided with cooperating coupling elements formed by slots, for form-fittingly receiving the protrusions of the beam.

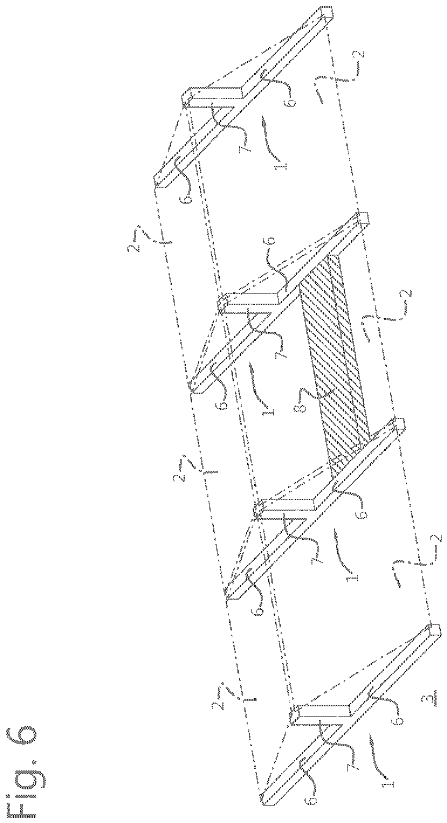

Figure 6 shows a roof system with frame parts according to the invention, wherein solar panels 2 are supported by frame parts 1 comprising beams 6 and uprights 7, wherein frame parts 1 not supporting the same solar panel are coupled by a spacer 8.

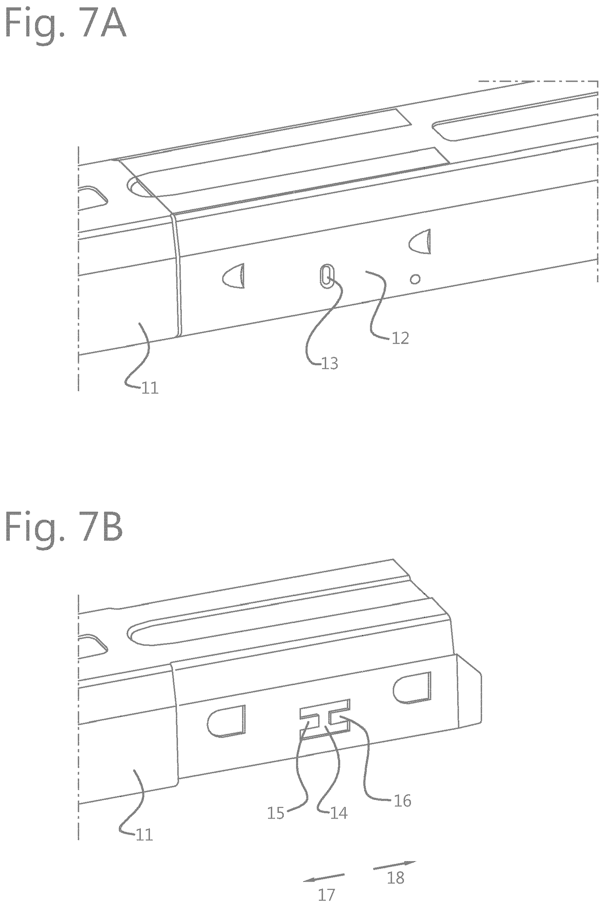

Figure 7 shows two beams 11, 12 according to the invention that may be mutually coupled. In order to avoid deformations due to heating of these usually metal parts, a coupling 13, 14 may be applied that allows mutual displacement from a default (coupled) position. The coupling may for instance comprise a notch 13 on one beam and a slot 14 on another beam or spacer, wherein the notch is accommodated in the slot in the default (coupled) position. The coupling may be configured for urging the notch into the default position, unless a threshold force exerted by springs 15, 16 is exceeded when the notch 13 is moved from the default position in either direction 17 or 18.

The embodiments shown in the above figures are examples for explaining the invention only and do not limit the scope of the invention as defined in the following claims. In particular, in all embodiments, solar panels can be oriented in a landscape or in a portrait orientation.

## Claims

1. Frame part (1) for supporting at least one first solar panel (2) with respect to a support surface (3), in particular a flat roof, comprising:
- A first gripping device (4), such as a clamp, for gripping a first solar panel at or near a first longitudinal side (2A);
- A second gripping device (5), such as a clamp, for gripping the first solar panel at or near a second longitudinal side (2B) opposite the first longitudinal side (2A) of said panel;
- A beam (6) for positioning the first and second gripping device at a mutual distance in a direction parallel to the support surface;
- An upright (7), connected to the beam and extending at an angle from the beam, for keeping the second gripping device (5) at such a distance from the support surface (3) that the second gripping device (5) is further from the support surface (3) than the first gripping device (4) and the first solar panel (2) is therefore arranged at an angle to the support surface (3) when supported;
**wherein**
- at least the second gripping device (5) is rotatably connectable to the upright 7, in order to be able to rotate the first solar panel relative to the frame part (1) when engaged by the second gripping device (5),
wherein the beam (6) extends on either side of the connection with the upright (7) and is designed to hold a third gripping device on a side remote from the first gripping device (4), for engaging a second solar panel, wherein
- the frame is designed to hold a fourth gripping device which is rotatably connected to the upright, for being able to rotate the second solar panel relative to the frame part (1) when engaged by the fourth gripping device wherein the frame part (1) is configured for holding the first (2) and the second solar panel positioned adjacent to each other and wherein the second (5) and fourth gripping devices are provided with a locking element such as a bolt or a clamp that are accessible from the bottom side of the respective first (2) and second solar panel.

2. Frame part (1) according to claim 1, wherein the second gripping device (5) and the upright (7) are detachable from each other in at least one first mutual angular orientation, for connecting the second gripping device (5) to the first solar panel before connecting the second gripping device (5) to the upright (7).

3. Frame part (1) according to claim 2, wherein the second gripping device (5) and the upright (7) comprise mutually cooperating locking elements, such as a cam and a slot in which the cam can be received in a form-fitting manner by mutual rotation of the second gripping device (5) relative to the upright (7), which locking elements are configured to release the lock in at least the first mutual angular orientation, and to engage the lock in at least a second angular orientation, in which the first solar panel (2) is engaged by both the first (4) and the second (5) gripping device.

4. Frame part (1) according to any of the preceding claims, wherein the first gripping device (4) is displaceable relative to the beam (6) with a directional component in the direction from and towards the upright (7).

5. Frame part (1) according to any of the preceding claims, wherein the third gripping device is displaceable relative to the beam with a directional component in the direction towards the upright (7).

6. A frame part (1) according to any one of the preceding claims, wherein the upright (7) is rotatably connected to the beam (6) for orienting the upright parallel to the beam for allowing compact transportation of the frame part.

7. Frame part (1) according to claim 6, wherein the upright is provided with a cable carrier which is rotatable relative to the upright (7) and which is displaceable between:
- A first position, in which the cable carrier is wholly received in the upright (7); and
- A second position, in which the cable carrier extends with a directional component perpendicular to the upright (7) and preferably completely perpendicular to the upright (7) and wherein at least one cable eye or cable duct or cable clamp extends outside the upright (7).

8. Frame part (1) according to any of the preceding claims, wherein the first gripping device and the beam are detachable from each other in at least one first mutual angular orientation, for connecting the first gripping device to the first solar panel before connecting the first gripping device to the beam.

9. Frame, formed from at least two frame parts (1) according to one of the preceding claims, wherein the beams (6) extend parallel to each other and are mutually connected by a spacer, wherein the beams (6) and the spacer are provided with mutually cooperating connecting elements, which are arranged for form-fitting engagement with each other when the spacer extends perpendicular to the beams (6), parallel to the support surface.

10. Frame according to claim 9, wherein the spacer is provided with a plurality of connecting elements cooperating with the beams (6), which connecting elements are spaced from each other in a longitudinal direction of the spacer, in order to be able to connect parallel beams (6) at a plurality of distances perpendicular to the spacer.

11. Frame according to claim 9 or 10, wherein the spacer is further configured for carrying a weight, such as a pavement tile.

12. Solar system, comprising a frame or frame part (1) according to any of the preceding claims.

13. Method for installing solar panels (2), using a frame according to any of claims 10-12, comprising the steps of:
- Prior to bringing a solar panel (2) into a definitive orientation with respect to a support surface 3, engaging the solar panel (3) with a second gripping device (5) at or near a second longitudinal side of the solar panel (2) opposite to a first longitudinal side thereof, the second gripping device (5) connected or connectable to a beam (6) for supporting the at least one solar panel (2) relative to a support surface 3;
- Bringing the solar panel (2) into a definitive orientation with respect to a support surface (3);
- Subsequently to bringing a solar panel (2) into a definitive orientation relative to a support surface (3), engaging the solar panel (2) with a first gripping device (4) at or at the height of the first longitudinal side of the solar panel (2).

14. A method according to claim 13, comprising coupling the second gripping device (5) to a frame part (1) for carrying a solar panel (2) prior to bringing the solar panel (2) into the final orientation relative to the support surface (3) and placing it in a definitive orientation in the coupled position while the second gripping device (5) and the frame part (1) rotate relative to each other.

15. A method according to claim 13 or 14, using a frame or frame part (1) according to any of claims 1-11, in particular for creating a solar system according to claim 12.

## Patentansprüche

1. Rahmenteil (1) zur Abstützung mindestens eines ersten Solarpaneels (2) gegenüber einer Tragfläche (3), insbesondere einem Flachdach, aufweisend:
- eine erste Greifvorrichtung (4), wie etwa eine Klemme, zum Greifen eines ersten Solarpaneels an oder in der Nähe von einer ersten Längsseite (2A);
- eine zweite Greifvorrichtung (5), wie etwa eine Klemme, zum Greifen des ersten Solarpaneels an oder in der Nähe von einer zweiten Längsseite (2B) gegenüber der ersten Längsseite (2A) des Paneels;
- einen Träger (6) zum Positionieren der ersten und zweiten Greifvorrichtung in wechselseitigem Abstand in einer Richtung parallel zu der Tragfläche;
- ein aufstehendes Element (7), das mit dem Träger verbunden ist und sich in einem Winkel von dem Träger erstreckt, um die zweite Greifvorrichtung (5) in einem solchen Abstand von der Tragfläche (3) zu halten, dass sich die zweite Greifvorrichtung (5) weiter weg von der Tragfläche (3) befindet als die erste Greifvorrichtung (4) und dass das erste Solarpaneel (2) so in einem Winkel zur Tragfläche (3) angeordnet ist, wenn es abgestützt ist;
**wobei**
- zumindest die zweite Greifvorrichtung (5) mit dem aufstehenden Element (7) drehbar verbindbar ist, um das erste Solarpaneel gegenüber dem Rahmenteil (1) drehen zu können, wenn ein Griff durch die zweite Greifvorrichtung (5) besteht,
wobei sich der Träger (6) zu beiden Seiten der Verbindung mit dem aufstehenden Element (7) erstreckt und ausgelegt ist, auf einer der ersten Greifvorrichtung (4) abgewandten Seite eine dritte Greifvorrichtung zu halten, um ein zweites Solarpaneel zu greifen, wobei
- der Rahmen ausgelegt ist, eine vierte Greifvorrichtung zu halten, die mit dem aufstehenden Element drehbar verbunden ist, um das zweite Solarpaneel bezüglich des Rahmenteils (1) drehen zu können, wenn ein Griff durch die vierte Greifvorrichtung besteht, wobei das Rahmenteil (1) ausgelegt ist, das erste (2) und das zweite Solarpaneel in zueinander benachbarter Position zu halten und wobei die zweite (5) und die vierte Greifvorrichtung mit einem Verriegelungselement wie etwa einem Bolzen oder einer Klemme versehen sind, das von der unteren Seite des jeweiligen ersten (2) und zweiten Solarpaneels zugänglich ist.

2. Rahmenteil (1) gemäß Anspruch 1, wobei die zweite Greifvorrichtung (5) und das aufstehende Element (7) bei zumindest einer ersten wechselseitigen Winkelausrichtung voneinander lösbar sind, um die zweite Greifvorrichtung (5) mit dem ersten Solarpaneel zu verbinden, bevor man die zweite Greifvorrichtung (5) mit dem aufstehenden Element (7) verbindet.

3. Rahmenteil (1) gemäß Anspruch 2, wobei die zweite Greifvorrichtung (5) und das aufstehende Element (7) miteinander zusammenwirkende Verriegelungselemente aufweisen, wie etwa einen Nocken und einen Schlitz, in dem der Nocken durch wechselseitige Drehung der zweiten Greifvorrichtung (5) bezüglich des aufstehenden Elements (7) formschlüssig aufnehmbar ist, wobei diese Verriegelungselemente ausgelegt sind, die Verriegelung in wenigstens der ersten wechselseitigen Winkelausrichtung zu lösen und die Verriegelung in wenigstens einer zweiten Winkelausrichtung herzustellen, in der das erste Solarpaneel (2) im Griff von sowohl der ersten (4) als auch der zweiten (5) Greifvorrichtung steht.

4. Rahmenteil (1) gemäß einem der vorhergehenden Ansprüche, wobei die erste Greifvorrichtung (4) bezüglich des Trägers (6) mit einer Richtungskomponente in der Richtung von dem aufstehenden Element (7) weg und zu diesem hin versetzbar ist.

5. Rahmenteil (1) gemäß einem der vorhergehenden Ansprüche, wobei die dritte Greifvorrichtung bezüglich des Trägers mit einer Richtungskomponente in der Richtung zu dem aufstehenden Element (7) hin versetzbar ist.

6. Rahmenteil (1) gemäß einem der vorhergehenden Ansprüche, wobei das aufstehende Element (7) mit dem Träger (6) drehbar verbunden ist, um das aufstehende Element parallel zu dem Träger auszurichten, um so das Rahmenteil kompakt transportieren zu können.

7. Rahmenteil (1) gemäß Anspruch 6, wobei das aufstehende Teil mit einem Kabelträger versehen ist, der bezüglich des aufstehenden Teils (7) drehbar ist und der versetzbar ist zwischen:
- einer ersten Position, in der der Kabelträger gänzlich in dem aufstehenden Element (7) aufgenommen ist; und
- einer zweiten Position, in der sich der Kabelträger in einer Richtungskomponente senkrecht zu dem aufstehenden Element (7) erstreckt und vorzugsweise genau senkrecht zu dem aufstehenden Element (7) steht, und wobei sich zumindest eine Kabelöse oder ein Kabeldurchlass oder eine Kabelklemme außerhalb des aufstehenden Elements erstreckt (7).

8. Rahmenteil (1) gemäß einem der vorhergehenden Ansprüche, wobei die erste Greifvorrichtung und der Träger bei zumindest einer ersten wechselseitigen Winkelausrichtung voneinander lösbar sind, um die erste Greifvorrichtung mit dem ersten Solarpaneel zu verbinden, bevor man die erste Greifvorrichtung mit dem Träger verbindet.

9. Rahmen, ausgebildet aus zumindest zwei Rahmenteilen (1) gemäß einem der vorhergehenden Ansprüche, wobei sich die Träger (6) zueinander parallel erstrecken und mittels eines Abstandshalters miteinander verbunden sind, wobei die Träger (6) und der Abstandshalter mit miteinander zusammenwirkenden Verbindungselementen versehen sind, die so ausgebildet sind, dass ein formschlüssiger Eingriff ineinander hergestellt wird, wenn sich der Abstandshalter senkrecht zu den Trägern (6) und parallel zu der Tragfläche erstreckt.

10. Rahmen gemäß Anspruch 9, wobei der Abstandshalter mit einer Mehrzahl an Verbindungselementen versehen ist, die mit den Trägern (6) zusammenwirken, wobei diese Verbindungselemente in einer Längsrichtung des Abstandshalters voneinander beabstandet sind, um so parallele Träger (6) in einer Mehrzahl von Abständen senkrecht zu dem Abstandshalter verbinden zu können.

11. Rahmen gemäß Anspruch 9 oder 10, wobei der Abstandshalter ferne ausgelegt ist, ein Gewicht wie etwa eine Bodenplatte zu tragen.

12. Solarsystem, aufweisend einen Rahmen oder ein Rahmenteil (1) gemäß einem der vorhergehenden Ansprüche.

13. Verfahren zur Montage von Solarpaneelen (2) unter Nutzung eines Rahmens gemäß einem der Ansprüche 10-12, aufweisend die Schritte:
- vor einem Verbringen eines Solarpaneels (2) in eine endgültige Ausrichtung bezüglich einer Tragfläche (3), Vorsehen eines Greifens des Solarpaneels (3) durch eine zweite Greifvorrichtung (5) an oder in der Nähe von einer zweiten Längsseite des Solarpaneels (2) gegenüber einer ersten Längsseite desselben, wobei die zweite Greifvorrichtung (5) mit einem Träger (6) verbunden oder verbindbar ist, um das zumindest eine Solarpaneel (2) bezüglich einer Tragfläche (3) abzustützen;
- Verbringen des Solarpaneels (2) in eine endgültige Ausrichtung bezüglich einer Tragfläche (3);
- nach dem Verbringen des Solarpaneels (2) in eine endgültige Ausrichtung bezüglich einer Tragfläche (3), Vorsehen eines Greifens des Solarpaneels (2) durch eine erste Greifvorrichtung (4) an oder in der Nähe von der ersten Längsseite des Solarpaneels (2).

14. Verfahren gemäß Anspruch 13, aufweisend Ankoppeln der zweiten Greifvorrichtung (5) an ein Rahmenteil (1) zum Tragen des Solarpaneels (2) vor dem Verbringen des Solarpaneels (2) in eine endgültige Ausrichtung bezüglich der Tragfläche (3) und Platzieren desselben, sodass es in der angekoppelten Position eine endgültige Ausrichtung einnimmt, während sich die zweite Greifvorrichtung (5) und der Rahmenteil (1) zueinander drehen.

15. Verfahren gemäß Anspruch 13 oder 14 unter Nutzung eines Rahmens oder Rahmenteils (1) gemäß einem der Ansprüche 1-11, insbesondere zum Herstellen eines Solarsystems gemäß Anspruch 12.

## Revendications

1. Partie de châssis (1) pour supporter au moins un premier panneau solaire (2) par rapport à une surface de support (3), en particulier un toit plat, comprenant :
- un premier dispositif de préhension (4), tel qu'une pince, pour tenir un premier panneau solaire au niveau ou près d'un premier côté longitudinal 2A ;
- un deuxième dispositif de préhension (5), tel qu'une pince, pour tenir le premier panneau solaire au niveau ou près d'un deuxième côté longitudinal 2B opposé au premier côté longitudinal 2A dudit panneau ;
- une poutre (6) pour positionner les premier et deuxième dispositifs de préhension selon une certaine distance mutuelle dans une direction parallèle à la surface de support ;
- un montant (7), relié à la poutre et s'étendant selon un certain angle par rapport à la poutre, pour maintenir le deuxième dispositif de préhension (5) à une distance de la surface de support (3) telle que le deuxième dispositif de préhension (5) est plus éloigné de la surface de support (3) que le premier dispositif de préhension (4) et le premier panneau solaire (2) est donc disposé selon un certain angle par rapport à la surface de support (3) lorsqu'il est supporté ;
dans laquelle
- au moins le deuxième dispositif de préhension (5) peut être relié de manière rotative au montant 7, afin de pouvoir faire tourner le premier panneau solaire par rapport à la partie de châssis (1) lorsqu'il est en prise avec le deuxième dispositif de préhension (5)
dans laquelle la poutre (6) s'étend de chaque côté de la liaison avec le montant (7) et est conçue pour maintenir un troisième dispositif de préhension sur un côté distant du premier dispositif de préhension (4), afin de venir en prise avec un deuxième panneau solaire, dans laquelle
- le châssis est conçu pour maintenir un quatrième dispositif de préhension qui est relié de manière rotative au montant, afin de pouvoir faire tourner le deuxième panneau solaire par rapport à la partie de châssis (1) lorsqu'il est en prise avec le quatrième dispositif de préhension, dans laquelle la partie de châssis (1) est configurée pour maintenir les premier (2) et deuxième panneaux solaires positionnés adjacents l'un à l'autre et dans laquelle les deuxième (5) et quatrième dispositifs de préhension sont pourvus d'un élément de verrouillage tel qu'un boulon ou une pince qui sont accessibles depuis le côté inférieur des premier (2) et deuxième panneaux solaires respectifs.

2. Partie de châssis (1) selon la revendication 1, dans laquelle le deuxième dispositif de préhension (5) et le montant (7) sont détachables l'un de l'autre dans au moins une première orientation angulaire mutuelle, afin de relier le deuxième dispositif de préhension (5) au premier panneau solaire avant de relier le deuxième dispositif de préhension (5) au montant (7).

3. Partie de châssis (1) selon la revendication 2, dans laquelle le deuxième dispositif de préhension (5) et le montant (7) comprennent des éléments de verrouillage coopérant mutuellement, tels qu'une came et une fente dans laquelle la came peut être reçue par complémentarité de forme par rotation mutuelle du deuxième dispositif de préhension (5) par rapport au montant (7), lesquels éléments de verrouillage sont configurés pour libérer le verrou au moins dans la première orientation angulaire mutuelle, et pour venir en prise avec le verrou au moins dans une deuxième orientation angulaire, dans laquelle le premier panneau solaire (2) est en prise à la fois avec le premier (4) et le deuxième (5) dispositif de préhension.

4. Partie de châssis (1) selon l'une des revendications précédentes, dans laquelle le premier dispositif de préhension (4) peut être déplacé par rapport à la poutre (6) avec une composante directionnelle dans la direction depuis et vers le montant (7).

5. Partie de châssis (1) selon l'une des revendications précédentes, dans laquelle le troisième dispositif de préhension peut être déplacé par rapport à la poutre avec une composante directionnelle dans la direction vers le montant (7).

6. Partie de châssis (1) selon l'une quelconque des revendications précédentes, dans laquelle le montant (7) est relié de manière rotative à la poutre (6) afin d'orienter le montant parallèlement à la poutre afin de permettre un transport compact de la partie de châssis.

7. Partie de châssis (1) selon la revendication 6, dans laquelle le montant est pourvu d'un porte-câble qui peut tourner par rapport au montant (7) et qui peut être déplacé entre :
- une première position, dans laquelle le porte-câble est entièrement reçu dans le montant (7) ; et
- une deuxième position, dans laquelle le porte-câble s'étend avec une composante directionnelle perpendiculaire au montant (7) et de préférence complètement perpendiculaire au montant (7) et dans laquelle au moins un œillet de câble ou conduit de câble ou serre-câble s'étend à l'extérieur du montant (7).

8. Partie de châssis (1) selon l'une des revendications précédentes, dans laquelle le premier dispositif de préhension et la poutre sont détachables l'un de l'autre dans au moins une première orientation angulaire mutuelle, afin de relier le premier dispositif de préhension au premier panneau solaire avant de relier le premier dispositif de préhension à la poutre.

9. Châssis, formé à partir d'au moins deux parties de châssis (1) selon l'une des revendications précédentes, dans lequel les poutres (6) s'étendent parallèlement l'une à l'autre et sont reliées ensemble par une entretoise, dans lequel les poutres (6) et l'entretoise sont pourvues d'éléments de liaison coopérant mutuellement, qui sont disposés pour une mise en prise par complémentarité de forme l'un avec l'autre lorsque l'entretoise s'étend perpendiculairement aux poutres (6), parallèlement à la surface de support.

10. Châssis selon la revendication 9, dans lequel l'entretoise est pourvue d'une pluralité d'éléments de liaison coopérant avec les poutres (6), lesquels éléments de liaison sont espacés les uns des autres dans une direction longitudinale de l'entretoise, afin de pouvoir relier des poutres (6) parallèles selon une pluralité de distances perpendiculairement à l'entretoise.

11. Châssis selon la revendication 9 ou 10, dans lequel l'entretoise est en outre configurée pour porter un poids, tel qu'un pavé de revêtement.

12. Système solaire, comprenant un châssis ou une partie de châssis (1) selon l'une des revendications précédentes.

13. Procédé d'installation de panneaux solaires (2), utilisant un châssis selon l'une des revendications 10-12, comprenant les étapes consistant à :
- avant de mettre un panneau solaire (2) dans une orientation définitive par rapport à une surface de support 3, mettre le panneau solaire (3) en prise avec un deuxième dispositif de préhension (5) au niveau ou près d'un deuxième côté longitudinal du panneau solaire (2) opposé à un premier côté longitudinal de celui-ci, le deuxième dispositif de préhension (5) étant relié ou pouvant être relié à une poutre (6) afin de supporter l'au moins un panneau solaire (2) par rapport à une surface de support 3 ;
- mettre le panneau solaire (2) dans une orientation définitive par rapport à une surface de support (3) ;
- par la suite, mettre un panneau solaire (2) dans une orientation définitive par rapport à une surface de support (3), mettre le panneau solaire (2) en prise avec un premier dispositif de préhension (4) au niveau ou à la hauteur du premier côté longitudinal du panneau solaire (2).

14. Procédé selon la revendication 13, comprenant l'accouplement du deuxième dispositif de préhension (5) à une partie de châssis (1) afin de porter un panneau solaire (2) avant de mettre le panneau solaire (2) dans l'orientation finale par rapport à la surface de support (3) et le placement de celui-ci dans une orientation définitive dans la position accouplée alors que le deuxième dispositif de préhension (5) et la partie de châssis (1) tournent l'un par rapport à l'autre.

15. Procédé selon la revendication 13 ou 14, utilisant un châssis ou une partie de châssis (1) selon l'une des revendications 1-11, en particulier afin de créer un système solaire selon la revendication 12.
